# EUROPÄISCHE PATENTSCHRIFT

(11) **EP 1 393 473 B1**
(45) Veröffentlichungstag und Bekanntmachung des Hinweises auf die Patenterteilung: **26.09.2007**
(21) Anmeldenummer: 02740370.8
(22) Anmeldetag: 22.05.2002
(51) Int. Cl.: H04B 7/26

(54) **VERFAHREN ZUR SYNCHRONISATION VON BASISSTATIONEN IN EINEM FUNK-KOMMUNIKATIONSSYSTEM**
METHOD FOR SYNCHRONISING BASE STATIONS IN A RADIO COMMUNICATIONS SYSTEM
PROCEDE PERMETTANT DE SYNCHRONISER DES STATIONS DE BASE DANS UN SYSTEME DE RADIOCOMMUNICATION

(30) Priorität: 22.05.2001 DE 10125013
(43) Veröffentlichungstag der Anmeldung: 03.03.2004
(73) Patentinhaber: NOKIA SIEMENS NETWORKS GMBH & CO. KG, 81541 München (DE)
(72) Erfinder: BAHRENBURG, Stefan, 28832 Achim (DE); HÖYNCK, Andreas, 16540 Hohen Neuendorf (DE); DONG, Chen, TJ-100102 Beijing (CN)
(86) Internationale Anmeldenummer: PCT/DE2002/001854
(87) Internationale Veröffentlichungsnummer: WO 2002/095985

(56) Entgegenhaltungen:
- WO-A-01/15340
- DE-A- 19 911 480
- DE-A- 19 916 064
- "Presentation to TSG-RAN Meeting #15: 3GPP TR 25.868 V2.0.0; 3rd Generation Partnership Project; Technical Specification Group Radio Access Network; Node B synchronization for 1.28 Mcps TDD; Rel 5" INTERNET ARTICLE, [Online] März 2002 (2002-03), XP002210763 Gefunden im Internet: <URL:http://www.3gpp.org/ftp/tsg_ran/TSG_R AN/TSGR_15/Docs/PDFs/RP-020251.pdf> [gefunden am 2002-08-22]
- "3GPP TS 25.402 V.4.0.0 Release 4; Universal mobile telecommunications system (UMTS); Synchronization in UTRAN stage 2" INTERNET ARTICLE, [Online] März 2001 (2001-03), Seite 1-42 XP002210764 Gefunden im Internet: <URL:http://WEBAPP.ETSI.ORG/exchangefolder /ts_125402v040000p.pdf> [gefunden am 2002-08-23]

## Beschreibung

Die Erfindung betrifft ein Verfahren zur Synchronisation von Basisstationen in einem Funk-Kommunikationssystem, insbesondere in einem Mobilfunksystem.

In dem Release 4 der im Rahmen der Standardisierung des UMTS-Mobilfunksystems (Universal Mobile Telecommunication System) definierten so genannten 1,28 Mcps TDD-Option (TDD - Time Division Duplex) erfolgt die Synchronisierung von Basisstationen (NodeB) über eine Synchronisierungs-Schnittstelle (Synchronisation Port) an den jeweiligen Basisstationen, die entweder mit einem GPS-Empfänger (Global Positioning System), d.h. mit einer weltweit gültigen Realzeit, oder mit einer Synchronisierungs-Schnittstelle der zugeordneten Funknetzsteuerung RNC (Radio Network Controller), die eine Zeitreferenz für alle mit ihr verbundenen Basisstationen zur Verfügung stellt, verbunden wird. Nach der abgeschlossenen Definition eines Verfahrens zur Synchronisation von Basisstationen über die Funkschnittstelle für die so genannte 3,84 Mcps TDD-Option des UMTS-Mobilfunksystems in dem Release 4 wird die Realisierung eines entsprechenden Verfahrens für die 1,28 Mcps TDD-Option angestrebt. Die 1,28 Mcps TDD-Option wird allgemein auch als TD-SCDMA (Time Division - Synchronized Code Division Multiple Access) bezeichnet, da sie als Besonderheit einen sychronisierten Empfang von Signalen, sowohl von gemeinsam genutzten Kanälen (RACH - Random Access Channel) als auch individuell zugewiesenen Kanälen (DCH - Dedicated Channels), am Ort der Basisstation anstrebt.

Die vorangehend genannten Verfahren, die Ausgestaltung von dafür erforderlichen Kanälen und Synchronisationssequenzen, sowie die an ein Verfahren zur Synchronisation von Basisstationen gestellten Anforderungen sind den folgenden Dokumenten entnehmbar:
[1] 3GPP TS25.221 v4.0.0, "Physical channels and mapping of transport channels onto physical channels (TDD) (Release 4)"
[2] 3GPP TS25.223 v4.0.0, "Spreading and modulation (TDD) (Release 4)"
[3] 3GPP TS25.224 v4.0.0, "Physical Layer Procedures (TDD) (Release 4)"
[4] TSGR1#13(00)0381, TSG-RAN Working Group 1 meeting #13, Tokyo, Japan, 22. - 25. May 2000, "Criteria for TDD cell synchronization methods", Source: Siemens
[5] TSGR1#13(00)0770, TSG-RAN Working Group 1 meeting #13, Tokyo, Japan, 22. - 25. May 2000, "Criteria for TDD cell synchronization methods", Source: Siemens, Interdigital

Weiterhin ist aus der DE 199 16 064 A1 ein Synchronisationsverfahren für Basisstationen in einem Funk-Kommunikationssystem mit einer TDD-Separierung der Funkschnittstelle bekannt, bei dem von einer ersten Basisstation in einem Übergang zwischen Abwärts- und Aufwärtsrichtung ein Synchronisationssignal gesendet wird, welches von einer zweiten Basisstation empfangen und für eine zeitliche Synchronisation verwendet wird.

Aus der DE 199 11 480 A1 ist ferner bekannt, dass von Basistationen zur Synchronisation von Basisstationen zyklisch eine Basisstationssynchronisationssequenz in einem Synchronisationskanal gesendet wird, und dass von einer Basisstation jeweils von zumindest zwei benachbarten Basisstationen empfangene Sequenzen für eine Synchronisation berücksichtigt werden.

Die WO 01/15340 A1 offenbart ein Verfahren zur Synchronisation von Basisstationen, bei dem ein zufallsgesteuerter Zugriffskanal (engl. Random Access Channel) von Basisstationen für eine Übertragung von Synchronisationssignalen verwendet wird. Jede Basisstation berechnet dabei Zeitdifferenzen zwischen von benachbarten Basisstationen empfangenen Synchronisationssignalen und einem eigenen Synchronisationssignal. Diese Zeitdifferenzen werden anschließend entweder für eine autonome oder eine zentrale Synchronisation der Basisstation mittels einer Funknetzsteuerung (engl. Radio Network Controller) verwendet.

Aufgabe der Erfindung ist es folglich, ein Verfahren anzugeben, das eine effiziente Synchronisation von Basisstationen über die Funkschnittstelle unter Berücksichtigung der Struktur der 1,28 Mcps-TDD-Option ermöglicht. Diese Aufgabe wird durch die Verfahren mit den Merkmalen der unabhängigen Patentansprüche gelöst. Weiterbildungen der Erfindung sind den abhängigen Patentansprüchen entnehmbar.

Gemäß einem ersten Verfahren wird von einer ersten Basisstation eine Synchronisationssequenz in einem Zeitschlitz gesendet, der von den Basisstationen zur Aussendung von Synchronisationssequenzen in Abwärtsrichtung zur Synchronisation von Teilnehmerstationen genutzt wird. Die Synchronisationssequenz wird von benachbarten Basisstationen empfangen und für die Synchronisation berücksichtigt. Dabei unterdrücken die benachbarten Basisstationen während des Empfangs der von der ersten Basisstation gesendeten Synchronisationssequenz für die Synchronisation von Basisstationen die eigene Aussendung von Synchronisationssequenzen zur Synchronisation von Teilnehmerstationen.

Vorteilhaft wird durch dieses Verfahren sicher gestellt, dass keinerlei Beschränkung der Sendeleistung zur Aussendung der Synchronisationssequenz im Rahmen der durch den Standard definierten Grenzen aufgrund von möglichen Interferenzstörungen bestehen, da der Zeitschlitz in der 1,28 Mcps TDD-Option allein für die Synchronisation in Abwärtsrichtung genützt wird. Weiterhin werden weder für Verkehrskanäle noch für Zugriffe durch Teilnehmerstationen reservierte Resourcen genützt. Die Zugriffssteuerung bleibt somit vorteilhaft von dem Verfahren unberührt. Dieses steht im Unterschied zu der Lösung für die 3,84 Mcps TDD-Option, bei der eine spezielle Synchrönisationssequenz zur Synchronisation der benachbarten Basisstationen in dem eigentlich für den Zugriffskanal RACH (Random Access Channel) vorgesehenen Zeitschlitz übertragen wird. Weiterhin stellt die Nutzung des DwPCH (Downlink Pilot Channel) in dem DwPTS (Downlink Pilot Timeslot) des Zeitrahmens der 1,28 Mcps TDD-Option sicher, dass die Synchronisationssequenz zur Synchronisation der Basisstationen nicht von Teilnehmerstationen ausgesandte Synchronisationssequenzen in dem UpPCH (Uplink Pilot Channel) in dem UpPTS (Uplink Pilot Timeslot) überlagert, da zwischen diesen Pilot-Zeitschlitzen eine große Schutzzeit (Guard Period) vorgesehen ist.

Einer weiteren Ausgestaltung zufolge wird die Aussendung und der Empfang der Synchronisationssequenz zur Synchronisation der Basisstationen von einer Basisstationssteuerung bzw Funknetzsteuerung gesteuert. Diese zentrale Steuerung der Aussendung und des Empfangs kann dabei dem in der 3,84 Mcps TDD-Option verwendeten Verfahren entsprechen.

Gemäß einer weiteren Ausgestaltung wird als Synchronisationssequenz eine für eine Synchronisation von Teilnehmerstationen bestimmte Sequenz verwendet. Hierdurch ist vorteilhaft kein neuer Funkblocktyp erforderlich, welches die Komplexität der Realisierung des Verfahrens in dem System verringert. Weiterhin können die Teilnehmerstationen auch während des Verfahrens die Synchronisationssequenz zur Synchronisation auf das Funk-Kommunikationssystems nutzen. Alternativ hierzu kann eine spezielle, den Teilnehmerstationen nicht bekannte Synchronisationssequenz verwendet werden, wodurch es seitens der Teilnehmerstationen vorteilhaft nicht zu einer Fehlinterpretation kommen kann. Einer weiteren Ausgestaltung zufolge kann auch eine im Vergleich zu einer für die Synchronisation von Teilnehmerstationen verwendete Sequenz verlängerte Sequenz verwendet werden. Hierdurch kann vorteilhaft der Prozess-Gewinn (Processing-Gain) im Vergleich zu der normalen Länge der Synchronisationssequenzen gesteigert werden. Dieses spiegelt sich in Form einer größeren Reichweite und sichereren Detektierbarkeit wieder.

Einem zweiten erfindungsgemäßen Verfahren zufolge wird von einer der Basisstationen eine Synchronisationssequenz in einem Zeitschlitz übertragen, der von den Basisstationen für den Empfang von Synchronisationssequenzen von Teilnehmerstationen vorgesehen ist. Diese Synchronisationssequenz wird wiederum zur Synchronisation der benachbarten Basisstationen genutzt. Dabei unterdrückt die sendende Basisstationen während des Aussendens der Synchronisationssequenz den Empfang von Synchronisationssequenzen von Teilnehmerstationen.

Entsprechend dem ersten erfindungsgemäßen Verfahren wird durch das zweite Verfahren vorteilhaft sicher gestellt, dass keinerlei Beschränkung der Sendeleistung zur Aussendung der Synchronisationssequenz im Rahmen der durch den Standard definierten Grenzen aufgrund von möglichen Interferenzstörungen bestehen, da der Zeitschlitz in der 1,28 Mcps TDD-Option allein für den Erstzugriff in Aufwärtsrichtung genutzt wird.

Einer weiteren Ausgestaltung des zweiten erfindungsgemäßen Verfahrens zufolge wird die Aussendung und der Empfang der Synchronisationssequenz zur Synchronisation der Basisstationen von einer Basisstationssteuerung bzw. Funknetzsteuerung gesteuert. Diese zentrale Steuerung der Aussendung und des Empfangs kann dabei dem in der 3,84 Mcps TDD-Option verwendeten Verfahren entsprechen.

Gemäß einer weiteren Ausgestaltung des zweiten erfindungsgemäßen Verfahrens wird als Synchronisationssequenz eine für einen Erstzugriff von Teilnehmerstationen auf das Funk-Kommunikationssystem bestimmte Sequenz verwendet. Hierdurch ist vorteilhaft kein neuer Funkblocktyp erforderlich, welches die Komplexität der Realisierung des Verfahrens in dem System reduziert. Alternativ hierzu kann eine spezielle Synchronisationssequenz verwendet werden, wodurch es in den empfangenden Basisstationen vorteilhaft nicht zu einer Fehlinterpretation und deutlichen Unterscheidung zu Aussendungen der Teilnehmerstationen kommen kann. Einer weiteren Ausgestaltung zufolge kann auch eine im Vergleich zu einer für den Erstzugriff von Teilnehmerstationen verwendete Sequenz verlängerte Sequenz verwendet werden. Hierdurch kann vorteilhaft der Prozess-Gewinn (Processing-Gain) im Vergleich zu der normalen Länge der Synchronisationssequenzen gesteigert werden. Dieses spiegelt sich in Form einer größeren Reichweite und sichereren Detektierbarkeit wieder. Dieser Prozess-Gewinn kann durch die Nutzung von gerichteten Antennen bzw. Strahlformung in der sendenden und/oder empfangenden Basisstation weiter erhöht werden.

Einem dritten erfindungsgemäßen Verfahren zufolge wird von benachbarten Basisstationen jeweils ein gleicher erster Zeitschlitz zum Aussenden einer ersten Synchronisationssequenz zum Synchronisieren von Teilnehmerstationen und ein gleicher zweiter Zeitschlitz für den Empfang einer von den Teilnehmerstationen ausgesendeten zweiten Synchronisationssequenz vorgesehen. Von einer der Basisstationen wird erfindungsgemäß in dem ersten und dem zweiten Zeitschlitz eine dritte Synchronisationssequenz ausgesendet, die von benachbarten Basisstationen empfangen und für eine Synchronisierung berücksichtigt wird. Insbesondere zur Erhöhung der Detektionssicherheit unterdrücken die sendende Basisstation während des Aussendens der dritten Synchronisationssequenz den Empfang von zweiten Synchronisationssequenzen von Teilnehmerstationen und die empfangenden Basisstationen während des Empfangs der dritten Synchronisationssequenz das Aussenden einer ersten Synchronisationssequenz zur Synchronisation von Teilnehmerstationen.

Wie in dem ersten und zweiten erfindungsgemäßen Verfahren besteht auch beim dritten erfindungsgemäßen Verfahren vorteilhaft keine Beschränkung der Sendeleistung aufgrund von gegebenenfalls nachteiliger Interferenzbeeinflussung weiterer Signalübertragungen, da die Zeitschlitze insbesondere in der 1,28 Mcps TDD-Option exklusiv für die Synchronisation vorgesehen sind.

Gemäß einer ersten Weiterbildung des dritten Verfahrens wird zusätzlich zu dem ersten und zweiten Zeitschlitz eine dazwischen liegende Schutzzeit ebenfalls zur Aussendung der Synchronisationsequenz genutzt. Diese Ausgestaltung nutzt vorteilhaft die Zeitrahmenstruktur insbesondere der 1,28 Mcps TDD-Option, da hierdurch eine spezielle, die Zeitschlitze und Schutzzeit übergreifende Synchronisationssequenz verwendet werden kann, die einen entsprechend hohen Prozessgewinn sicher stellt.

Gemäß einer weiteren Weiterbildung der erfindungsgemäßen Verfahren empfängt eine Teinehmerstation von einer sie versorgenden und von weiteren Basisstationen ausgesandte Synchronisationssequenzen. Nachfolgend wird aus dem jeweils ermittelten Empfangszeitpunkt eine Position der Teilnehmerstation bestimmt. Vorteilhaft kann dieses in der gleichen Weise wie bei der beschriebenen Synchronisation der Basisstationen erfolgen. Gesteuert durch eine Funknetzsteuerung senden abwechselnd die Basisstationen Synchronisationssequenzen in Abwärtsrichtung, so dass die Teilnehmerstation diese eindeutig empfangen kann. Einer Weiterbildung zufolge signalisiert die Teilnehmerstation die Empfangszeitpunkte und/oder eine jeweilige Differenz der Empfangszeitpunkte zu dem Netzwerk, das nachfolgend die Positionsbestimmung durchführt.

Einer weiteren Weiterbildung zufolge erfolgt die Positionsbestimmung nach einer erfolgten Synchronisation der Basisstationen, wodurch vorteihaft eine hohe Genauigkeit bei der Positionsbestimmung gewährleistet werden kann.

Nachfolgend wird die Erfindung anhand eines Ausführungsbeispiels näher beschrieben. Dabei zeigen
- FIG 1: ein Blockschaltbild eines Teils eines Funk-Kommunikationssystems,
- FIG 2: eine Zeitrahmenstruktur des 1,28 Mcps-TDD-Modus,
- FIG 3: eine Struktur des DwPTS,
- FIG 4: eine Struktur des UpPTS, und
- FIG 5: eine Struktur der Kombination des DwPTS, GP sowie UpPTS.

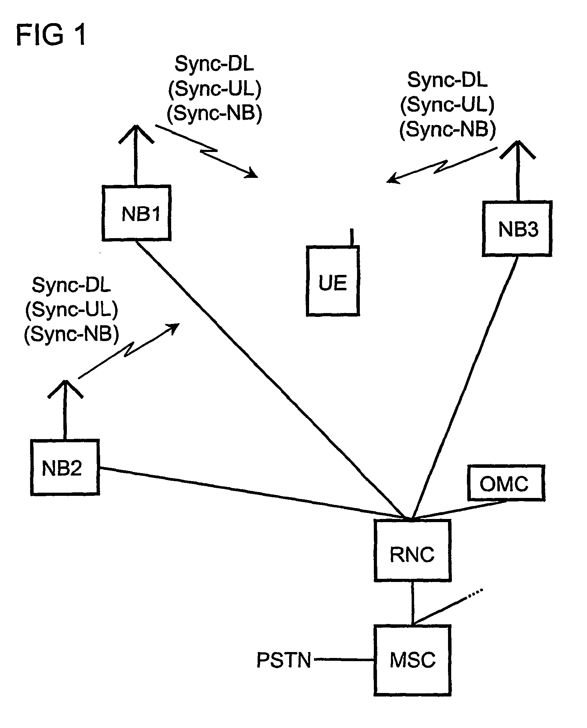

Die FIG 1 zeigt ein Blockschaltbild eines Funk-Kommunikationssystems, speziell eines UMTS-Mobilfunksystems. Diese Struktur läßt sich jedoch in einfacher Weise auf andere Systeme übertragen, in dem die Erfindung ebenfalls verwirklicht werden kann.

Das UMTS-Mobilfunksystem besteht aus einer Vielzahl von Mobilvermittlungsstellen MSC (Mobile Switching Center), die einen Übergang zu einem leitungsgebundenen Festnetz PSTN ermöglichen. Jede Mobilvermittlungsstelle MSC ist mit einer Vielzahl von Funknetzsteuerungen RNC (Radio Network Controller) verbunden, die jeweils eine zentrale Verwaltung von Funkressourcen für ein oder mehrere Basisstationen NB (NodeB) durchführen. Die Basisstationen NB ermöglichen wiederum eine Verbindung zu einer Vielzahl von Teilnehmerstationen UE (User Equipment) über eine Funkschnittstelle entsprechend einem spezifischen Teilnehmerseparierungsverfahren. Dabei wird nach einer Übertragung in Aufwärtsrichtung UL (Uplink) von den Teilnehmerstationen UE zu der Basisstation NB bzw. der Abwärtsrichtung DL (Downlink) von der Basisstation NB zu den Teilnehmerstationen UE unterschieden. Durch jede Basisstation NB wird zumindest eine mit funktechnischen Resourcen versorgte Funkzelle gebildet. Die Teilnehmerstationen UE sind beispielsweise als mobile Funkstationen oder als ortsfeste drahtlose Netzabschlußgeräte, beispielsweise eines drahtlosen Teilnehmeranschlußsystems (Access Network), verwirklicht. Die Mobilvermittlungsstelle MSC ist weiterhin mit einem Operations- und Wartungszentrum OMC (Operation and Maintenancer Center) verbunden, in dem wichtige Parameter des Systems administriert werden und das eine Mensch-Maschine-Schnittstelle darstellt.

Auf der Funkschnittstelle zwischen der Basisstation NB und den Teilnehmerstationen UE werden Signalisierungsinformationen und Nutzdaten unterschiedlicher Dienste übertragen. Hierzu gehören auch so genannte Synchronisationssequenzen Sync-DL, die von den Basisstationen NB in Abwärtsrichtung gesendet werden und mittels deren die Teilnehmerstationen UE auf die Zeitreferenz der jeweiligen Basisstation NB synchronisiert werden. In den nachfolgend beschriebenen erfindungsgemäßen Verfahren werden diese Sequenzen bzw. entsprechende spezielle Sequenzen zur Synchronisation von Basisstationen NB verwendet.

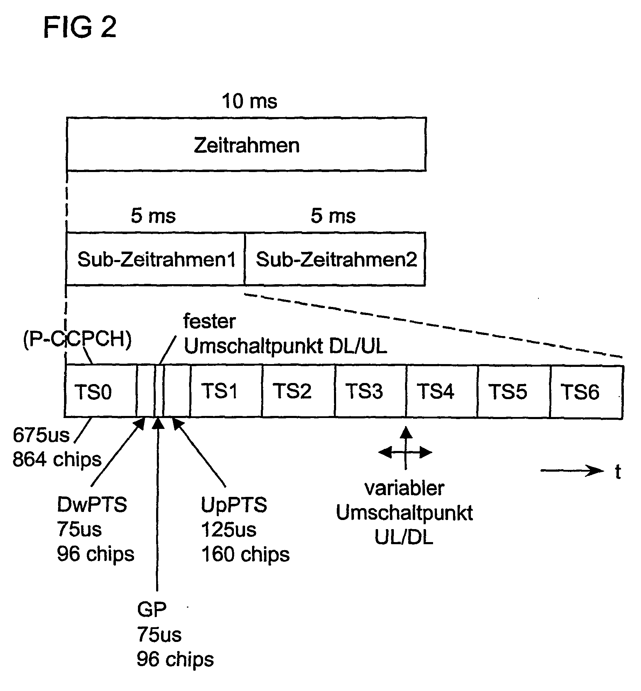

In der FIG 2 ist die Struktur eines Zeitrahmens bzw. Funkrahmens der 1,28 Mcps TDD-Option dargestellt. Dieser unterscheidet sich von der Struktur des Zeitrahmens der 3,84 Mcps TDD-Option, um spezielle Prozeduren auf der physikalischen Schicht zu ermöglichen. Der Zeitrahmen mit einer Länge von 10ms ist in zwei Sub-Zeitrahmen 1 und 2 mit jeweis 5ms Länge unterteilt. Jeder Sub-Zeitrahmen weist zwei Umschaltpunkte, so genannte Switching Points, auf, wobei der eine an einer festen Stelle immer nach dem ersten Zeitschlitz TS0 des jeweiligen Sub-Zeitrahmens, der auch den allgemeinen Signalisierungskanal BCH (Broadcast Channel) in dem P-CCPCH (Primary Common Control Physical Channel) trägt, und der zweite abhängig von einer erforderlichen Asymmetrie zwischen der Übertragung in Aufwärts- UL und Abwärtsrichtung DL variable innerhalb verbleibenden Zeitschlitze TS1 bis TS6 positioniert werden kann.

Der DwPTS (Downlink Pilot Timeslot - Pilotzeitschlitz in Abwärtsrichtung) in jedem Sub-Zeitrahmen dient einer ersten Synchronisation von empfangenden Teilnehmerstationen UE. Nachfolgend wird diese Synchronisation mittels der Mittambel des P-CCPCH aufrechterhalten. Diese Synchronisation ist der Synchronisation mittels des SCH (Synchronisation Channel - Synchronisierungskanal) in der 3,84 Mcps TDD-Option ähnlich. Die extra lange Schutzzeit GP (Guard Period) zwischen dem DwPTS und dem UpPTS (Uplink Pilot Timeslot - Pilotzeitschlitz in Aufwärtsrichtung) ist zur Unterstützung von großen Zellen mit einer entsprechend langen Laufzeit der Signale erforderlich. Der UpPTS wird für den ersten Schritt der zufallsgesteuerten Zugriffs, dem so genannten Random Access, der Teilnehmerstationen UE auf das Netzwerk genutzt. In dem UpPTS werden acht mögliche Sync-UL-Codes angeboten, aus denen sich die Teilnehmerstationen UE zufallsgesteuert einen auswählen, um konkurrierend mit anderen Teilnehmerstationen auf das Netzwerk einer Funkzelle zuzugreifen oder eine Synchronisation in Aufwärtsrichtung, die so genannte Uplink Synchronisation, wieder herzustellen. Dieser Kanal ist der einzige Kanal in der 1,28 Mcps TDD-Option, der nicht zu einem hohen Grade am Ort der Basisstation NB synchronisiert ist.

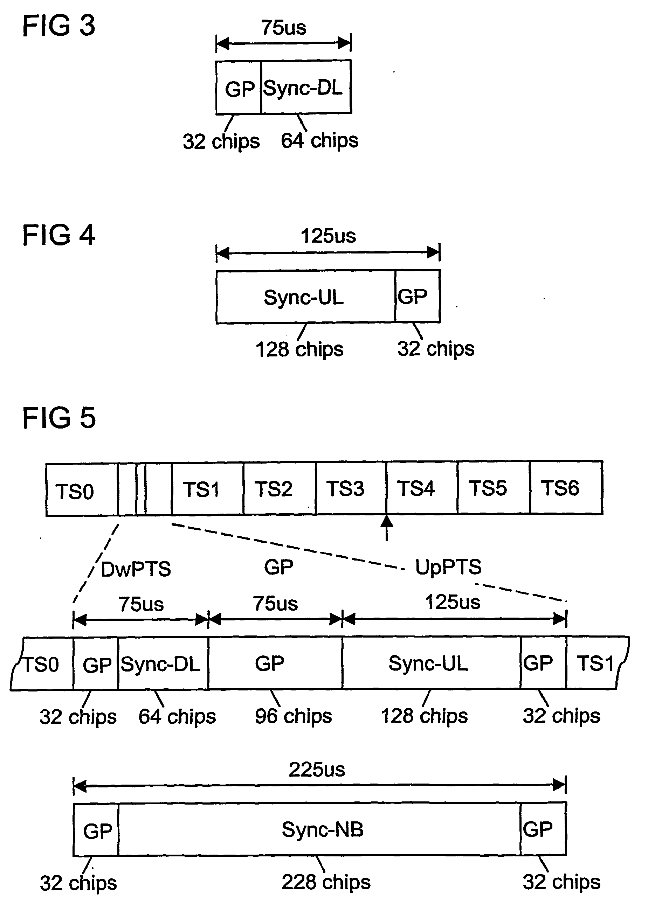

Gemäß dem ersten erfindungsgemäßen Verfahren wird die Sychronisation der Basisstationen durch die Nutzung des DwPTS zum Aussenden und Empfangen von Synchronisationssequenzen erzielt. Der DwPTS wird derzeit nach dem Stand der Technik gemäß dem Kapitel 6.3.5 der Referenz [1] ausschließlich für die Synchronisation von Teilnehmerstationen in Abwärtsrichtung genutzt. In der 1,28 Mcps TDD-Option existieren 32 Zellgruppen (Cellgroups), die jeweils einen unterschiedlichen Sync-DL-Code zur Aussendung in dem DwPTS verwenden. Der DwPCH (Downlink Pilot Channel) besteht, wie in der FIG 3 dargestellt, aus einer Schutzzeit GP mit einer Länge von 32 chips und der Sync-DL-Sequenz mit einer Länge von 64 chips. Die Sync-DL-Sequenz wird in Bezug auf die Mittambel des P-CCPCH, der immer in dem Zeitschlitz TS0 übertragen wird, moduliert. Diese Modulation gibt die Position in der Verschachtelungs-Periode (Interleaving Period) an, d.h. ob es ein gerader oder ungerader Zeitrahmen und ob es der erste oder zweite Sub-Zeitrahmen ist. Details hierzu sind der Referenz [2] zu entnehmen.

Erfindungsgemäß wird von einer Basisstation, beispielsweise NB1 entsprechend der FIG 1, in dem normalen DwPCH eine Sync-DL-Sequenz ausgesendet. Die benachbarten Basisstationen, in dem Beispiel der FIG 1 die Basisstationen NB2 und NB3, setzen während dieses DwPTS ihre eigene Aussendung von Sync-DL-Sequenzen aus und empfangen die Sync-DL-Sequenz der Basisstation NB1. Nachfolgend wird das gleiche Verfahren für die benachbarten Basisstationen durchgeführt. Die zeitliche Steuerung der jeweiligen Aussendung bzw. des jeweiligen Unterbrechens der Aussendung und stattdessen des Empfangs des Sync-DL-Sequenzen wird von der Funknetzsteuerung RNC, mit denen die Basisstationen NB1 bis NB3 verbunden sind, durchgeführt.

Durch den Empfang der Sync-DL-Sequenzen ermitteln die empfangenden Basisstationen die Zeitbasis der sendenden Basisstation und passen nachfolgend die eigene Aussendung der Sync-DL-Sequenz dieser Zeitbasis an. Alternativ hierzu werden entsprechend dem Kapitel 4.9 der Referenz [3] nach Empfang der Sync-DL-Sequenz die Zeitverschiebungen der empfangenden Basisstationen ermittelt und der Funknetzsteuerung signalisiert. Die Funknetzsteuerung generiert anschließend auf Basis dieser Daten ein so genanntes Cell timing Update, das zu den Basisstationen übertragen wird. Da diese Synchronität aufgrund von Verschiebungen der Zeitbasen der Basisstationen zeitlich begrenzt ist, muss die Synchronisationsprozedur in regelmäßigen Abständen, bei Feststellung des Bedarfs wiederholt werden und/oder von der Funknetzsteuerung angeregt werden.

Das erste erfindungsgemäße Verfahren kann zusätzlich für eine Unterstützung der Lokalisierung von Teilnehmerstationen verwendet werden. Dabei wird angenommen, dass die zeitliche Steuerung der Aussendung der Synchronisationssequenzen und der Verarbeitung der Messungen in der Funknetzsteuerung dem bekannten Verfahren der 3,84 Mcps TDD-Option zur Synchronisation von Basisstationen über die Funkschnittstelle ähnelt. Entsprechend kann auch die Realisierung der Signalisierung in höheren Schichten ähnlich vorgenommen werden. Dies betrifft beispielsweise auch die Signalisierung von freien Zeiten in der Abwärtsrichtung (IPDL - Idle Period in Downlink) zur Positionsbestimmung von Teilnehmerstationen, wie sie in Kapitel 4.10 der Referenz [3] beschrieben ist.

Die sendende Basisstation NB1 sendet den normalen DwPCH, d.h. sie sendet eine Sync-DL-Sequenz in dem DwPTS. Die empfangenden benachbarten Basisstationen NB2, NB3 messen diese Sequenz in ihrem jeweiligen DwPTS, weshalb die entsprechende Aussendung von Sync-DL-Sequenzen in dem DwPTS in den benachbarten Basisstationen NB2, NB3 unterdrückt werden muss, um die Messung der gesendeten Sync-DL-Sequenz zu ermöglichen. Die zeitliche Steuerung der Aussendung der Synchronisationssequenz Sync-DL durch die Basisstation NB1 und der gleichzeitigen Unterdrückung der Aussendung in den benachbarten Basisstationen NB2,NB3 erfolgt durch die Funknetzsteuerung RNC.

Nach einer erfolgreichen Synchronisation der Basisstationen empfängt eine Teilnehmerstation UE sequenziell sowohl den DwPCH der aktuell versorgenden Basisstation NB1, als auch die DwPCH der benachbarten Basisstationen NB2, NB3. Die zeitliche Steuerung der Aussendung erfolgt dabei entsprechend der Synchronisation der Basisstationen, wobei die DwPCHs der Teilnehmerstation als IPDLs signalisiert werden. Entsprechend können die für die Positionsbestimmung verwendeten IPDLs für die Basisstationssynchronisierung verwendet werden, so dass die knappen Funkressourcen nur einmal genutzt werden müssen. Mittels der empfangenen Zeitdifferenz (OTDOA) der empfangenen DwPCHs, die von der Teilnehmerstation UE über die versorgende Basisstation NB1 zu dem Netzwerk UTRAN (UMTS Terrestrial Radio Access Network) signalisiert werden, kann das Netzwerk die Position der Teilnehmerstation UE bestimmen. Das erfindungsgemäße Verfahren kann somit vorteilhaft gleichzeitig zur Synchronisation von Basisstationen und zur Psotitionsbestimmung von Teilnehmerstationen eingesetzt werden, wobei keinerlei neue Signale definiert werden müssen.

Gemäß dem zweiten erfindungsgemäßen Verfahren wird die Sychronisation der Basisstationen durch die Nutzung des UpPTS zum Aussenden und Empfangen von Synchronisationssequenzen erzielt. Der UpPTS wird derzeit nach dem Standard der 1,28 Mcps TDD-Option ausschließlich für den zufallsgesteuerten Erstzugriff, dem so genannten Random Access, der Teilnehmerstationen in Aufwärtsrichtung sowie zum Anfordern einer Synchronisation und einer Sendeleistungssteuerung nach einer Verbindungsweiterschaltung (Handover) zu der aktuellen Funkzelle genutzt.

In der 1,28 Mcps TDD-Option stehen 8 mögliche individuelle Sync-UL-Codes für jede Zellgruppe (Cellgroup) zur Verwendung in dem UpPTS zur Verfügung. Für den Erstzugriff wird von einer Teilnehmerstation zufallsgesteuert einer dieser Sync-UL-Codes ausgewählt und in dem UpPTS zu der Basisstation, zu der eine Verbindung aufgebaut werden soll, gesendet. Der UpPTS (Uplink Pilot Timeslot) besteht, wie in der FIG 4 dargestellt, aus einer Sync-UL-Sequenz mit einer Länge von 128 chips sowie aus einer Schutzzeit GP mit einer Länge von 32 chips. Die größere Länge der Synchronisationssequenz Sync-UL im Vergleich zu der Sync-DL-Sequenz ermöglicht vorteilhaft einen größeren Prozessgewinn; 128 chips entsprechen 21 dB im Vergleich zu 18 dB bei einer 64 chips.

Nach dem erfindungsgemäßen Verfahren nutzt eine Basisstation, beispielsweise die Basisstation NB1 entsprechend FIG 1, den ersten Teil des Random Access Prozedur in Form des UpPCH zur Übertragung einer Sync-UL-Sequenz. Diese Sync-UL-Sequenz wird von den benachbarten Basisstationen, in dem Beispiel der FIG 1 die Basisstationen NB2 und NB3, empfangen. Nachfolgend senden auch die benachbarten Basisstationen NB2, NB3 sequenziell eine Sync-UL-Sequenz in dem UpPCH. Die Synchronität der Basisstationen wird entsprechend dem vorangehenden Beispiel zu dem ersten erfindungsgemäßen Verfahren erzielt.

Der UpPCH der sendenden Basisstation muss für den Zeitraum der Aussendung des Sync-UL-Sequenz blockiert werden, d.h. in diesem Zeitraum können Zugriffsanforderungen von Teilnehmerstationen von der sendenden Basisstation nicht empfangen werden. Der UpPCH der benachbarten Basisstationen NB2,NB3 können gegebenenfalls weiterhin genutzt werden, sofern ein Empfang der Sync-UL-Sequenz der Basisstation NB1 sichergestellt ist. Dieses kann beispielsweise durch die Wahl einer speziellen Sync-UL-Sequenz, die ausschließlich für die Synchronisation der Basisstationen verwendet wird, und/oder durch die Aussendung mit einer erhöhten Sendeleistung erfolgen.

Gemäß dem dritten erfindungsgemäßen Verfahren wird die Sychronisierung der Basisstationen durch die gemeinsame Nutzung sowohl des DwPTS, der Schutzzeit GP als auch des UpPTS zum Aussenden und Empfangen von Synchronisationssequenzen erzielt. Durch die Kombination dieser drei speziellen Zeitschlitze, UpPTS, GP und DwPTS, wird die Nutzung einer sehr langen Synchronisationssequenz ermöglicht. Die Zeitschlitze weisen weiterhin den gemeinsamen Vorteil auf, dass in ihnen außer Synchronisationssequenzen keinerlei weitere Daten übertragen werden, weshalb die Synchronisationssequenzen mit einer erhöhten Sendeleistung ausgesendet werden können, ohne hierdurch eine Störung von weiteren Datenübertragungen zu verursachen.

Eine derart verlängerte Basisstations-Synchronisationssequenz Sync-NB ist beispielhaft in der FIG 5 dargestellt. Eine Länge der Synchronisationssequenz von bis zu 288 chips führt vorteilhaft zu einem nochmals gegenüber den vorangehend beschriebenen Verfahren erhöhten Prozessgewinn von bis zu 24 dB. Vorteilhaft wird hierdurch die Detektionssicherheit dieses Signals erhöht, und die Synchronisation von Basisstationen wird auch bei größeren Funkzellradien, d.h. bei einem größerer Abstand zwischen den Basisstationen, ermöglicht. Vorteilhaft können weiterhin so genannte CEC (Cyclically Extended Codes), wie sie in der 3,84 Mcps TDD-Option verwendet werden, unterstützt werden.

Von der Funknetzsteuerung zeitlich gesteuert senden die Basisstationen sequenziell jeweils eine verlängerte Synchronisationssequenz, wobei die jeweils empfangenden benachbarten Basisstationen die Aussendung von für die Synchronisation von Teilnehmerstationen vorgesehenen Sync-DL-Sequenzen während des Empfangs der verlängerten Basisstations-Synchronisationssequenz unterdrücken müssen, und entsprechend die aussendende Basisstation den Empfang von Sync-UL-Sequenzen von Teilnehmerstationen unterdrücken muss. Die Verarbeitung der Basisstations-Synchronisationssequenz und Synchronisierung der Basisstationen erfolgt entsprechend dem vorangehend beschriebenen Verfahren.

## Patentansprüche

1. Verfahren zur Synchronisation von Basisstationen (NB) in einem Funk-Kommunikationssystem, wobei die Funkschnittstelle des Funk-Kommunikationssystems gemäß einem TDMA-Verfahren strukturiert ist, bei dem
von benachbarten Basisstationen (NB) jeweils in einem gleichen Zeitschlitz (DwPTS) eines Zeitrahmens (Sub-Zeitrahmen 1) Synchronisationssequenzen (Sync-DL) zur Synchronisation von Teilnehmerstationen (UE) ausgesendet werden, und
von einer ersten Basisstationen (NB1) in dem Zeitschlitz (DwPTS) eine Synchronisationssequenz (Sync-DL) zur Synchronisation von Basisstationen ausgesendet wird, die von benachbarten Basisstationen (NB2,NB3) empfangen und für eine Synchronisierung berücksichtigt wird, wobei die benachbarten Basisstationen (NB2,NB3) während des Empfangs der Synchronisationssequenz (Sync-DL) zur Synchronisation von Basisstationen der ersten Basisstation (NB1) die Aussendung von Synchronisationssequenzen (Sync-DL) zur Synchronisation von Teilnehmerstationen (UE) unterdrücken.

2. Verfahren nach Anspruch 1, bei dem
die Aussendung und der Empfang der Synchronisationssequenz (Sync-DL) zur Synchronisation von Basisstationen von einer Funknetzsteuerung (RNC) gesteuert wird.

3. Verfahren nach einem vorhergehenden Anspruch, bei dem
als Synchronisationssequenz (Sync-DL) zur Synchronisation von Basisstationen eine für eine Synchronisation von Teilnehmerstationen (UE) bestimmte Sequenz verwendet wird.

4. Verfahren nach einem der Ansprüche 1 oder 2, bei dem
als Synchronisationssequenz (Sync-DL) zur Synchronisation von Basisstationen eine im Vergleich zu einer für eine Synchronisation von Teilnehmerstationen (UE) verwendete Sequenz verlängerte Sequenz verwendet wird.

5. Verfahren nach einem vorhergehenden Anspruch, bei dem
die Synchronisationssequenz in einem abwärtsgerichteten Pilotzeitschlitz (DwPTS) zur Synchronisation von Teilnehmerstationen (UE) gesendet wird.

6. Verfahren zur Synchronisation von Basisstationen (NB) in einem Funk-Kommunikationssystem, wobei die Funkschnittstelle des Funk-Kommunikationssystems gemäß einem TDMA-Verfahren strukturiert ist, bei dem
von benachbarten Basisstationen (NB) jeweils ein gleicher Zeitschlitz (UpPTS) für den Empfang einer von Teilnehmerstationen übertragenen Synchronisationssequenz (SYNC-UL) zur synchronisation von Teilnehmerstationen vorgesehen wird, und
von einer der Basisstationen (NB) in dem Zeitschlitz (UpPTS) eine Synchronisationssequenz (Sync-UL) zur synchronisation von Basisstationen übertragen wird, die von benachbarten Basisstationen (NB) empfangen und für eine Synchronisierung berücksichtigt wird, wobei die sendende Basisstation (NB) während des Aussendens der Synchronisationssequenz (Sync-UL) den Empfang von Synchronisationssequenzen (Sync-DL) von Teilnehmerstationen (UE) unterdrückt.

7. Verfahren nach Anspruch 6, bei dem
die Aussendung und der Empfang der Synchronisationssequenz (Sync-UL) von einer Funknetzsteuerung (RNC) gesteuert wird.

8. Verfahren nach Anspruch 6 oder 7, bei dem
als Synchronisationssequenz (Sync-UL) eine für einen Erstzugriff von Teilnehmerstationen (UE) auf das Funk-Kommunikationssystem bestimmte Sequenz verwendet wird.

9. Verfahren nach einem der Ansprüche 6 bis 8, bei dem
als Synchronisationssequenz (Sync-UL) eine im Vergleich zu einer von Teilnehmerstationen (UE) für den Erstzugriff verwendeten Sequenz verlängerte Sequenz verwendet wird.

10. Verfahren nach einem der Ansprüche 6 bis 9, bei dem
die Synchronisationssequenz (Sync-UL) in einem aufwärtsgerichteten Pilotzeitschlitz (UpPTS) zum Erstzugriff von Teilnehmerstationen (UE) gesendet wird.

11. Verfahren zur Synchronisation von Basisstationen (NB) in einem Funk-Kommunikationssystem, wobei die Funkschnittstelle des Funk-Kommunikationssystems gemäß einem TDMA-Verfahren strukturiert ist, bei dem
von benachbarten Basisstationen (NB) jeweils ein gleicher erster Zeitschlitz (DwPTS) zum Aussenden einer ersten Synchronisationssequenz (Sync-DL) zum Synchronisieren von Teilnehmerstationen und ein gleicher zweiter Zeitschlitz (UpPTS) für den Empfang einer von den Teilnehmerstationen (UE) ausgesendeten zweiten Synchronisationssequenz (Sync-UL) zum synchronisieren von Teilnehmerstationen vorgesehen wird, und
von einer der Basisstationen (NB) in dem ersten (DwPTS) und dem zweiten Zeitschlitz (UpPTS) eine dritte Synchronisationssequenz (Sync-NB) zur synchronisation von Basisstationen ausgesendet wird, die von benachbarten Basisstationen (NB) empfangen und für eine Synchronisierung berücksichtigt wird, wobei die sendende Basisstation (NB) während des Aussendens der dritten Synchronisationssequenz (Sync-NB) den Empfang von zweiten Synchronisationssequenzen (Sync-UL) von Teilnehmerstationen, und die empfangenden Basisstationen (NB) während des Empfangs der dritten Synchronisationssequenz das Aussenden einer ersten Synchronisationssequenz (Sync-DL) zur Synchronisation von Teilnehmerstationen (UE) unterdrücken.

12. Verfahren nach Anspruch 11, bei dem
eine zwischen dem ersten (DwPTS) und dem zweiten Zeitschlitz (UpPTS) liegende Schutzzeit (GP) ebenfalls zur Aussendung der Synchronisationsequenz (Sync-NB) genutzt wird.

13. Verfahren nach Anspruch 11 oder 12, bei dem
die Aussendung und der Empfang der dritten Synchronisationssequenz (Sync-NB) von einer Funknetzsteuerung (RNC) gesteuert wird.

14. Verfahren nach einem der vorhergehenden Ansprüche, bei dem
eine Teilnehmerstation (UE) gesendete Synchronisationssequenzen einer versorgenden (NB) und weiteren Basisstationen (NB) empfängt, und aus einem jeweils ermittelten Empfangszeitpunkt eine Position der Teilnehmerstation (UE) bestimmt wird.

15. Verfahren nach Anspruch 14, bei dem
die Teilnehmerstation (UE) die Empfangszeitpunkte und/oder eine jeweilige Differenz der Empfangszeitpunkte zu dem Netzwerk (UTRAN) signalisiert, und das Netzwerk (UTRAN) die Position der Teilnehmerstation (UE) ermittelt.

16. Verfahren nach Anspruch 14 oder 15, das
nach einer erfolgten Synchronisation der Basisstationen (NB) durchgeführt wird.

## Claims

1. Method for synchronising base stations (NB) in a radio communication system, with the radio interface of the radio communication system being structured according to a TDMA method, wherein
synchronisation sequences (Sync-DL) for synchronising subscriber stations (UE) are transmitted by adjacent base stations (NB) respectively in a same timeslot (DwPTS) of a time frame (sub-timeframe 1) and
a synchronisation sequence (Sync-DL) for synchronising base stations is transmitted by a first base station (NB1) in the timeslot (DwPTS), being received by adjacent base stations (NB2, NB3) and being taken into account for synchronisation, with the adjacent base stations (NB2, NB3) suppressing the transmission of synchronisation sequences (Sync-DL) for synchronising subscriber stations (UE) during receipt of the synchronisation sequence (Sync-DL) for synchronising base stations from the first base station (NB1).

2. Method according to claim 1, wherein
transmission and receipt of the synchronisation sequence (Sync-DL) for synchronising base stations are controlled by a radio network controller (RNC).

3. Method according to a preceding claim, wherein
a sequence intended for a synchronisation of subscriber stations (UE) is used as the synchronisation sequence (Sync-DL) for synchronising base stations.

4. Method according to one of claims 1 or 2, wherein
a longer sequence than a sequence used to synchronise subscriber stations (UE) is used as the synchronisation sequence (Sync-DL) for synchronising base stations.

5. Method according to a preceding claim, wherein
the synchronisation sequence is transmitted in a downlink pilot timeslot (DwPTS) for synchronising subscriber stations (UE).

6. Method for synchronising base stations (NB) in a radio communication system, with the radio interface of the radio communication system being structured according to a TDMA method, wherein
a same timeslot (UpPTS) is provided respectively by adjacent base stations (NB) for receipt of a synchronisation sequence (SYNC-UL) for synchronising subscriber stations transmitted by subscriber stations and
a synchronisation sequence (Sync-UL) for synchronising base stations is transmitted by one of the base stations (NB) in the timeslot (UpPTS), being received by adjacent base stations (NB) and being taken into account for synchronisation, with the transmitting base station (NB) suppressing the receipt of synchronisation sequences (Sync-DL) from subscriber stations (UE) during transmission of the synchronisation sequence (Sync-UL).

7. Method according to claim 6, wherein
transmission and receipt of the synchronisation sequence (Sync-UL) are controlled by a radio network controller (RNC).

8. Method according to claim 6 or 7, wherein
a sequence intended for initial access by subscriber stations (UE) to the radio communication system is used as the synchronisation sequence (Sync-UL).

9. Method according to one of claims 6 to 8, wherein
a longer sequence than a sequence used for initial access by subscriber stations (UE) is used as the synchronisation sequence (Sync-UL).

10. Method according to one of claims 6 to 9, wherein
the synchronisation sequence (Sync-UL) is transmitted in an uplink pilot timeslot (UpPTS) for initial access by subscriber stations (UE).

11. Method for synchronising base stations (NB) in a radio communication system, with the radio interface of the radio communication system being structured according to a TDMA method, wherein
a same first timeslot (DwPTS) is provided respectively by adjacent base stations (NB) to transmit a first synchronisation sequence (Sync-DL) for synchronising subscriber stations and a same second timeslot (UpPTS) for receipt of a second synchronisation sequence (Sync-UL) for synchronising subscriber stations transmitted by the subscriber stations (UE), and
a third synchronisation sequence (Sync-NB) for synchronising base stations is transmitted by one of the base stations (NB) in the first (DwPTS) and second (UpPTS) timeslots, being received by adjacent base stations (NB) and being taken into account for synchronisation, with the transmitting base station (NB) suppressing receipt of second synchronisation sequences (Sync-UL) from subscriber stations during transmission of the third synchronisation sequence (Sync-NB) and the receiving base stations (NB) suppressing transmission of a first synchronisation sequence (Sync-DL) for synchronising subscriber stations (UE) during receipt of the third synchronisation sequence.

12. Method according to claim 11, wherein
a guard period (GP) between the first (DwPTS) and second (UpPTS) timeslots is also used to transmit the synchronisation sequence (Sync-NB).

13. Method according to claim 11 or 12, wherein
transmission and receipt of the third synchronisation sequence (Sync-NB) are controlled by a radio network controller (RNC).

14. Method according to one of the preceding claims, wherein a subscriber station (UE) receives transmitted synchronisation sequences from a covering (NB) and further base stations (NB) and determines a position of the subscriber station (UE) from a respectively determined receipt time.

15. Method according to claim 14, wherein
the subscriber station (UE) signals the receipt times and/or a respective difference between receipt times to the network (UTRAN) and the network (UTRAN) determines the position of the subscriber station (UE).

16. Method according to claim 14 or 15, which
is implemented after the base stations (NB) have been synchronised.

## Revendications

1. Procédé permettant de synchroniser des stations de base (NB) dans un système de radiocommunication, l'interface radio du système de radiocommunication étant structurée selon un procédé TDMA, dans lequel
des séquences de synchronisation (Sync-DL) destinées à la synchronisation de stations d'abonné (UE) sont émises par des stations de base voisines (NB) respectivement dans un même créneau temporel (DwPTS) d'une trame temporelle (sous-trame temporelle 1) et
une séquence de synchronisation (Sync-DL) destinée à la synchronisation de stations de base est émise par une première station de base (NB1) dans le créneau temporel (DwPTS), cette séquence de synchronisation étant reçue par des stations de base voisines (NB2, NB3) et étant prise en compte pour une synchronisation, les stations de base voisines (NB2, NB3) supprimant, pendant la réception de la séquence de synchronisation (Sync-DL) destinée à la synchronisation de stations de base de la première station de base (NB1), l'émission de séquences de synchronisation (Sync-DL) destinées à la synchronisation de stations d'abonné (UE).

2. Procédé selon la revendication 1, dans lequel
l'émission et la réception de la séquence de synchronisation (Sync-DL) destinée à la synchronisation de stations de base sont commandées par une commande de réseau radio (RNC).

3. Procédé selon une quelconque revendication précédente, dans lequel
une séquence destinée à une synchronisation de stations d'abonné (UE) est utilisée en tant que séquence de synchronisation (Sync-DL) pour la synchronisation de stations de base.

4. Procédé selon l'une quelconque des revendications 1 ou 2, dans lequel
une séquence prolongée en comparaison à une séquence utilisée pour une synchronisation de stations d'abonné (UE) est utilisée en tant que séquence de synchronisation (Sync-DL) pour la synchronisation de stations de base.

5. Procédé selon l'une quelconque des revendications précédentes, dans lequel
la séquence de synchronisation est émise dans un créneau temporel pilote (DwPTS) en sens descendant pour la synchronisation de stations d'abonné (UE).

6. Procédé permettant la synchronisation de stations de base (NB) dans un système de radiocommunication, l'interface radio du système de radiocommunication étant structurée selon un procédé TDMA, dans lequel
un même créneau temporel (UpPTS) étant respectivement prévu par des stations de base voisines (NB) pour la réception d'une séquence de synchronisation (Sync-UL) transmise par des stations d'abonné, destinée à la synchronisation de stations d'abonné et
une séquence de synchronisation (Sync-UL) destinée à la synchronisation de stations de base est transmise par l'une des stations de base (NB) dans le créneau temporel (UpPTS), cette séquence de synchronisation étant reçue par des stations de base voisines (NB) et étant prise en compte pour une synchronisation, la station de base émettrice (NB) supprimant, pendant l'émission de la séquence de synchronisation (Sync-UL), la réception de séquences de synchronisation (Sync-DL) de stations d'abonné (UE).

7. Procédé selon la revendication 6, dans lequel
l'émission et la réception de la séquence de synchronisation (Sync-UL) sont commandées par une commande de réseau radio (RNC).

8. Procédé selon la revendication 6 ou 7, dans lequel
une séquence destinée à un accès initial de stations d'abonné (UE) au système de radiocommunication est utilisée en tant que séquence de synchronisation (Sync-UL).

9. Procédé selon l'une quelconque des revendications 6 à 8, dans lequel
une séquence prolongée, en comparaison à une séquence utilisée par des stations d'abonné (UE) pour l'accès initial, est utilisée en tant que séquence de synchronisation (Sync-UL).

10. Procédé selon l'une quelconque des revendications 6 à 9, dans lequel
la séquence de synchronisation (Sync-UL) est émise dans un créneau temporel pilote (UpPTS) en sens montant pour l'accès initial de stations d'abonné (UE).

11. Procédé permettant la synchronisation de stations de base (NB) dans un système de radiocommunication, l'interface radio du système de radiocommunication étant structurée selon un procédé TDMA, dans lequel
un même premier créneau temporel (DwPTS) est prévu par des stations de base voisines (NB) pour l'émission d'une première séquence de synchronisation (Sync-DL) destinée à la synchronisation de stations d'abonné et un même deuxième créneau temporel (UpPTS) est prévu pour la réception d'une deuxième séquence de synchronisation (Sync-UL), émise par les stations d'abonné (UE), destinée à la synchronisation de stations d'abonné, et
une troisième séquence de synchronisation (Sync-NB) destinée à la synchronisation de stations de base est émise par l'une des stations de base (NB) dans le premier créneau temporel (DwPTS) et dans le deuxième créneau temporel (UpPTS), cette troisième séquence de synchronisation étant reçue par des stations de base voisines (NB) et prise en compte pour une synchronisation, la station de base émettrice (NB) supprimant, pendant l'émission de la troisième séquence de synchronisation (Sync-NB), la réception de deuxièmes séquences de synchronisation (Sync-UL) de stations d'abonné, et les stations de base réceptrices (NB) supprimant, pendant la réception de la troisième séquence de synchronisation, l'émission d'une première séquence de synchronisation (Sync-DL) destinée à la synchronisation de stations d'abonné (UE).

12. Procédé selon la revendication 11, dans lequel
un temps de protection (GP) situé entre le premier créneau temporel (DwPTS) et le deuxième créneau temporel (UpPTS) est également utilisé pour l'émission de la séquence de synchronisation (Sync-NB).

13. Procédé selon la revendication 11 ou 12, dans lequel
l'émission et la réception de la troisième séquence de synchronisation (Sync-NB) sont commandées par une commande de réseau radio (RNC).

14. Procédé selon l'une quelconque des revendications précédentes, dans lequel
une station d'abonné (UE) reçoit des séquences de synchronisation émises par une station de base d'alimentation (NB) ainsi que par d'autres stations de base (NB), et une position de la station d'abonné (UE) est déterminée à partir d'un moment de réception respectivement déterminé.

15. Procédé selon la revendication 14, dans lequel
la station d'abonné (UE) signale au réseau (UTRAN) les moments de réception et/ou une différence respective des moments de réception, et le réseau (UTRAN) détermine la position de la station d'abonné (UE).

16. Procédé selon la revendication 14 ou 15, qui
est réalisé après l'exécution d'une synchronisation des stations de base (NB).
